# EUROPEAN PATENT APPLICATION

(11) **EP 3 125 503 A1**
(43) Date of publication of application: **01.02.2017**
(21) Application number: 15382394.3
(22) Date of filing: 29.07.2015
(51) Int. Cl.: H04L 29/08

(54) **A METHOD, A SYSTEM AND COMPUTER PROGRAM PRODUCTS FOR KEEPING AN END-TO-END DATA CONNECTION ACTIVE**

(71) Applicant: Telefonica Digital España, S.L.U., 28013 Madrid (ES)
(72) Inventor: NEYSTADT, Eugene, 44471 Kfar-Saba (IL); LANTZ, Johan, 28013 Madird (ES)
(74) Representative: Carlos Hernando, Borja

(57) **Abstract**

A method, a system and computer program products for keeping an end-to-end data connection active,

the method comprises: a) receiving, by a server (200) from a computing device (100) of a user, through a network element (150) in connection with said server (200) and said computing device (100), communication data on top of a transport layer protocol; b) sending, by the server (200) to said computing device (100), upon reception of said communication data, a transport layer acknowledgment message thereof; c) sending, by the server (200) to said computing device (100), a series of second transport layer acknowledgement messages at a given interval, wherein said second transport layer acknowledgement messages being duplicate transport layer acknowledgment messages, and being sent until a new transport layer acknowledgment message is sent in response to a new received communication data.

## Description

### Technical field

The present invention is directed, in general, to data communications. In particular, the invention relates to a method, a system, and computer programs products, for keeping an end-to-end data connection network active.

### Background of the invention

All communication applications such as VoIP rely on OSI stack's Layer 7 signaling to establish data connections, make calls and send messages to their peers. Due to the inherit nature of the Internet several problems occur with this model. Some of the most troublesome ones are the time it takes to reach a peer, the time it takes to detect that a peer is dead and how to maintain a connection active through various network elements in-the-middle such as NAT/Firewalls.

Almost all data connections on the Internet today will at some point have to pass at least through a NAT or a Firewall. A large contributor to this situation is that the number of IPv4 addresses are running out so not all computing devices can have a unique IP address and therefore routers and NAT's will create ranges of private addresses for the computing devices they are connecting, and may map each set of public IP address and port to a set of private IP address and port. Since the public IP address is a scarce resource, only the mappings with sets of private IP address and port that are actively used are maintained. This fact leads to NAT usually running timers and releasing the associations that have not been used over a period of time.

I Pv6 will reduce the NAT problems but will not help in the same way for Firewalls so the situation will persist.

The problem that arises is that these network elements in-the-middle do not have infinite resources (e.g. public IP addresses) and therefore they will, after a time, which is usually unknown to applications, remove connections deemed as inactive. This is naturally a huge problem for real time applications that needs to be reachable for incoming communication at all times.

The way to solve this problem is by using keep-alive signaling also known as heartbeat. There are many ways to implement a heartbeat mechanism but some common examples are:
- Using higher layer protocols: For instance in the case where SIP is used as the signaling protocol, the SIP OPTIONS or SIP REGISTER messages can be exchanged between the peers to signal both computing device capabilities as well as to maintain the connection alive. Since this solution requires rather large packets (+500 bytes) it will trigger changes to radio dedicated channels when on a mobile network which in turn is affecting the battery consumption. Therefore this solution is rarely used for mobile computing devices.
- Using small TCP packets: A popular and bandwidth efficient approach is to use the so-called Ping-Pong mechanism, described in RFC5626 where one peer sends a double CRLFCRLF packet over TCP/IP that is replied with a single CRLF packet if successfully received. If the sender receives this "pong" packet, it is assumed that the connection is still alive.

The Ping-Pong mechanism can be used both directly on the socket level and at the application level depending on the support from the underlying Operative System (OS) and the level of control required by the application.

Heartbeat can be initiated from the server side as well as the user/client side and many solutions employ both methods in parallel. Normally a connection failure is caused by activities in the user side, for instance moving out of coverage or to another network, but also due to a network element in-the-middle removing the resources allocated for the user.

Normal heartbeat methods require the user's client to wake up either to send a keep alive packet or to receive one from the server. One challenge here is that some OS limits how often a communication application is allowed to wake up and while waking up too often might force kill the communication application, waking up to seldom on the other hand might mean that connections are not maintained and incoming communications can be missed.

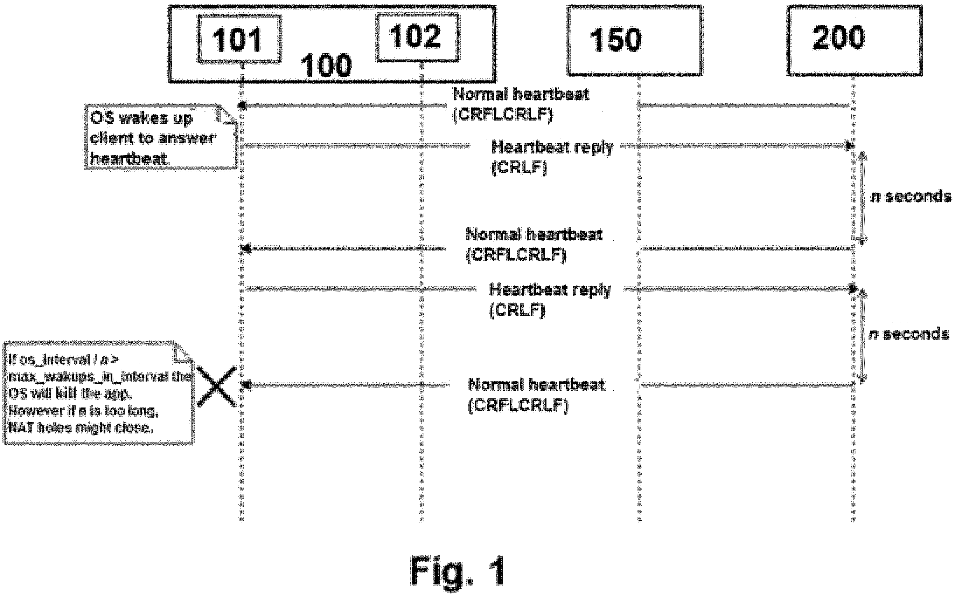

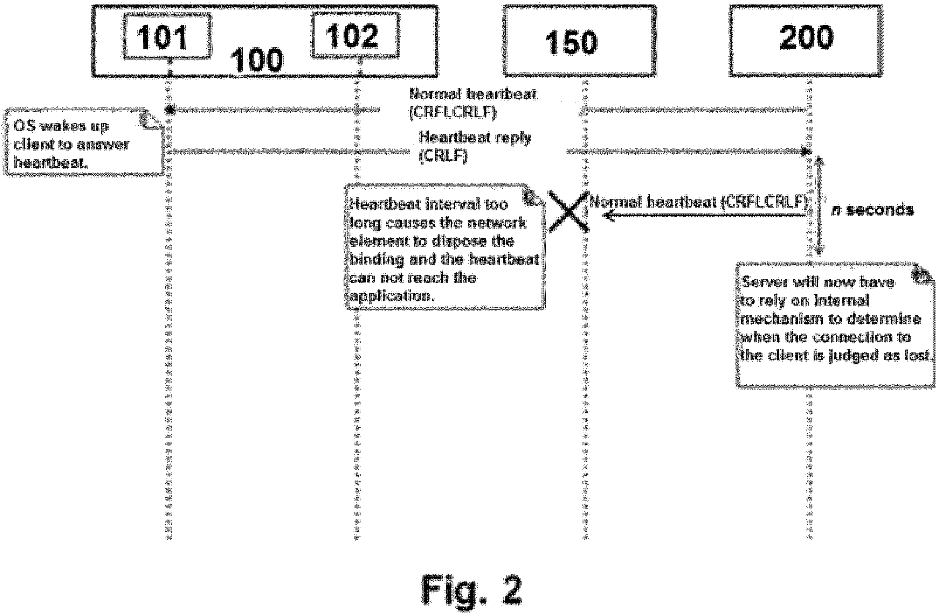

Fig. 1 and 2 illustrate two different common heartbeat processes, where the user is illustrated on the left with the internal TCP stack explicitly marked as the second box. In the middle it is illustrated the network element (normally a NAT box or a Firewall) causing the intermediate binding, i.e. a public-private IP address mapping. Finally on the right side it is illustrated the Session Border Controller acting as the terminating endpoint for the user on the server side.

The main problem with those existing solutions is the extra delay introduced especially when the connection is failing. In the case where a higher layer protocol for heartbeat is used, with a higher layer protocol such as SIP for the keep-alive, a failed transaction might take up to 32 seconds or longer to detect due to the inherit retransmission timers employed by SIP protocol. In real time communication scenarios this is far too long.

In the case where small TCP packets for heartbeat are used, when using the Ping-Pong mechanism, the introduced overhead is very small and will not trigger radio channel type changes for instance when in a 3G network. It also allows the receiver application to detect scenarios where it would have expected a ping packet in a certain interval but has not received one.

On the other hand, this approach will trigger a wake up of the communication application in order to answer the ping and some OS restricts the amount of times the communication application is allowed to wake up during a given interval. This will limit the minimum heartbeat rate to a level where it is no longer guaranteed to fulfill its purpose.

### Description of the Invention

Present invention provides according to a first aspect a method for keeping an end-to-end data connection active, the method comprises: receiving, by a server from a computing device of a user, through a network element in connection with said server and said computing device, communication data on top of a transport layer protocol; sending, by the server to said computing device, upon reception of said communication data, a transport layer acknowledgment message thereof; and sending, by the server to said computing device, a series of second transport layer acknowledgement messages at a given interval.

According to present invention, said second transport layer acknowledgement messages are duplicate transport layer acknowledgment messages, of the transport layer acknowledgment message firstly sent, and are sent until a new transport layer acknowledgment message is sent in response to a new received communication data.

According to the proposed method, the duration of the said interval is lower than a data connection inactivity period resulting in the network element releasing said data connection between the server and the computing device.

In addition, preferably, a transport layer stack of the computing device, upon reception of the second transport layer acknowledgement messages, discards the latter without notifying any upper layer in the communication stack.

According to an embodiment the network element is a NAT device. Alternatively, in another embodiment the network element is a Firewall device. Even, in yet another embodiment, the network element is a combined NAT / Firewall device.

According to an embodiment, the communication data preferably is a SIP-based communication.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Present invention increases the reliability for incoming connections since the proposed heartbeat procedure will not impact in any way on the receiving end. Moreover, the duplicated ACK packets will help keeping the already traversed network elements paths open with a minimal overhead.

The implementation can be done at OSI stack's Layer 4 making it resource efficient. Besides that, no extra logic for checking replies is needed making the proposed method compatible with existing protocol processing.

Furthermore, when the receiving end is a communication application, it will not be woken up and therefore no CPU or network impact will be detectable on the computing device.

Apart from that, present invention uses the existing TCP low level signaling in a way that tricks NAT elements and Firewalls to maintain its bindings open. The method implementation requires modifications in the communication session controller at kernel level that monitors and duplicates outgoing ACK packets and manually retransmits them at a certain interval.

This method still adheres to the TCP specification and the receiving end will simply discard the duplicate packets upon reception without any further notification to upper layers in the signaling stack.

It should be noted that TCP is cited as the preferred transport layer protocol for the implementation of this invention. However as an expert in the matter would appreciate other transport layer protocols can be used without departing from the scope and spirit of the invention.

### Brief Description of the Drawings

The previous and other advantages and features will be more deeply understood from the following detailed description of embodiments, with reference to the attached drawings, which must be considered in an illustrative and non-limiting manner, in which:
Fig. 1 and 2 are flow diagrams illustrating common state of the art heartbeat procedures. With reference to Fig. 1 it is illustrated a scenario in which after two excessively frequent heartbeats the OS of the computing device of a user doesn't allow the communication application to reply to further heartbeats and hence the communication application is forced to be killed. With reference to Fig. 2 it is illustrated a scenario in which too seldom heartbeats cause the NAT or Firewall to dispose the binding and hence the heartbeat cannot reach the communication application.

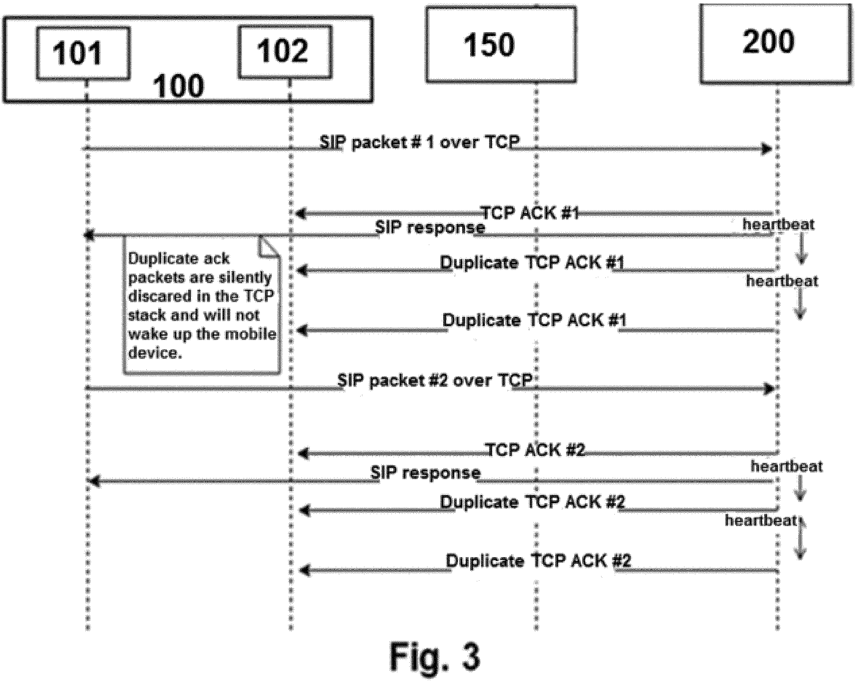

Fig. 3 is a flow diagram illustrating an embodiment of the proposed method for keeping an end-to-end data connection active.

### Detailed Description of the Invention

Fig. 3 illustrates an embodiment of the proposed method for keeping an end-to-end data connection active. Characteristically, according to this embodiment, the method uses duplicate TCP ACK messages as a technique of keeping said data connection, between two end users, a server 200 and a computing device 100 of a user (not illustrated) having installed therein a communication application 101, active, maintaining network element (e.g. NAT, Firewall, etc.) ports open.

As can be seen in Fig. 3, upon communication data on top of a transport layer protocol (i.e. a TCP packet) is received by the server 200, and a transport layer acknowledge message, or ACK message (i.e. TCP ACK), sent, this ACK message is preferably stored in the server 200. Then, the second server 200 sends, at a specific time interval duplicate ACK messages, until a new TCP packet is received from the computing device 100. The new received TCP packet will produce a new ACK message that will be sent by the server 200 periodically and so on.

By using these ACK message retransmissions a constant flow of messages is kept through the network but once they reach the computing device 100, preferably once a Transport Layer stack, i.e. TCP stack 102, in a chipset of the computing device 100 is reached, this TCP stack 102 will silently discard them and the communication application 101 will never be notified or woken up.

The advantage of this is that the OS cannot penalize the communication application 101 for excessive CPU or network usage when in background or low power mode. Moreover, the communication application 101 will not be assigned any CPU cycles to process the duplicate ACK packages since they are handled by the OS's TCP/IP driver and therefore the extra signaling is not conveyed to the communication application 101 at all; Furthermore, the extra data sent is kept to a minimum and also the network element 150 bindings are forced to stay open keeping the system available for incoming communications.

In the embodiment of Fig. 3 it is illustrated user-initiated/server-driven heart beating and naturally since the packets are discarded in the TCP stack 101 on the computing device chipset residing below the communication application 101 layer this method will not provide a way for the user to respond to the periodical ACK message and the network element 150 binding in the outgoing direction may be also lost. However, the proposed method is not limited to working in the direction server-user, on the contrary it would work just the same from user to server 200 but due to the complexity of modifying the kernel code to change the behavior of a user side TCP stack 102 it makes more sense to illustrate the server-to-user example since making the changes in one server 200 that is owned by the service provider is more realistic than changing the computing device 100 behavior.

In the end, the network element 150 bindings might have to be maintained independently in both directions but in the case of outgoing communications the user is able to detect and recover from a connection error and automatically retry or inform the user. In the case of inbound communications the problem is more severe since retry is not possible until the destination recovers the connection by other means and for real-time communications that will be too late. Due to this, the proposed method is primarily aimed at improving the possibilities for successful inbound network element 150 binding maintenance.

Due to this, present invention is a complementary solution and an extension of the traditional heartbeat mechanism. However, it is still worth it because outgoing communications from the user to the server 200 are usually not so delay-sensitive, e.g. taking a bit longer in establishing an outgoing call is not as critical as taking longer to alert about an incoming call as in the latter case the caller may not be aware of the connection problems and may end the communication attempt. In the case of an outgoing communication present invention can handle connection issues and inform the user. Due to this, even a one-way heartbeat using retransmissions of a previous ACK message from server 200 to user should keep the network element 150 port open in that direction, hence making the user more reachable without waking it up or wasting CPU cycles for processing application level keep alive packets.

Indeed the duplicate ACK signaling can also be employed in the user to server 200 direction but given the differences between OS's, i.e. usually no limitation in the time the services are active at the server 200 side as opposed to the user side, and that outbound connection issues can be handled locally it is more important to focus primarily on keeping the server 200 to user connection active.

This mechanism must be complemented by standard Ping-Pong heartbeat from both user and server 200 sides in order to verify that the connection is indeed alive. Therefore it should be seen as a complement to increase reliability using existing protocols in an unconventional way.

The proposed invention may be implemented in hardware, software, firmware, or any combination thereof. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

## Claims

1. A method for keeping an end-to-end data connection active, the method comprising:
a) receiving, by a server (200) from a computing device (100) of a user, through a network element (150) in connection with said server (200) and said computing device (100), communication data on top of a transport layer protocol;
b) sending, by the server (200) to said computing device (100), upon reception of said communication data, a transport layer acknowledgment message thereof; and
c) sending, by the server (200) to said computing device (100), a series of second transport layer acknowledgement messages at a given interval, wherein said second transport layer acknowledgement messages being duplicate transport layer acknowledgment messages, and being sent until a new transport layer acknowledgment message is sent in response to a new received communication data.

2. The method of claim 1, wherein duration of the said interval is lower than a data connection inactivity period resulting in the network element (150) releasing said connection between the server (200) and the computing device (100).

3. The method of claim 1, wherein a transport layer stack (102) of said computing device (100) upon reception of the second transport layer acknowledgement discards the latter without notifying any upper layer in the communication stack in the computing device (100).

4. The method of claim 1 or 2, wherein said network element (150) is at least one of: a NAT device, a Firewall device, or a NAT/Firewall device.

5. The method of claim 1, wherein the communication data is a SIP-based communication.

6. A system for keeping an end-to-end data connection active, comprising:
a computing device (100) of a user;
a server (200); and
a network element (150) in connection with said server (200) and said computing device (100),
wherein said server (200) comprises means adapted and configured for:
receiving, from the computing device (100), communication data on top of a transport layer protocol;
sending, to said computing device (100), upon reception of said communication data, a transport layer acknowledgment message thereof; and
sending, to said computing device (100), a series of second transport layer acknowledgement messages, the latter being duplicate transport layer acknowledgment messages and being sent until a new transport layer acknowledgment message is sent in response to a new received communication data.

7. The system of claim 6, wherein said network element (150) is at least one of: a NAT device, a Firewall device or a NAT/Firewall device.

8. The system of claim 6, wherein communication data is a SIP-based communication.

9. A computer program product comprising code instructions that when executed on a computer system implements the method steps of claim 1.
